# EUROPÄISCHE PATENTSCHRIFT

(11) **EP 4 188 650 B1**
(45) Veröffentlichungstag und Bekanntmachung des Hinweises auf die Patenterteilung: **25.09.2024**
(21) Anmeldenummer: 21745799.3
(22) Anmeldetag: 16.07.2021
(51) Int. Cl.: B25F 5/02, B25B 21/00

(54) **HANDWERKZEUGMASCHINE MIT EINEM EINSATZWERKZEUGMAGAZIN**
HAND-HELD POWER TOOL WITH AN INSERT TOOL MAGAZINE
OUTIL ÉLECTRIQUE PORTATIF DOTÉ D'UN CHARGEUR D'OUTILS RAPPORTÉS

(30) Priorität: 28.07.2020 DE 102020209489
(43) Veröffentlichungstag der Anmeldung: 07.06.2023
(73) Patentinhaber: Robert Bosch GmbH, 70442 Stuttgart (DE)
(72) Erfinder: HESSE, Juergen, 71111 Waldenbuch (DE)
(86) Internationale Anmeldenummer: PCT/EP2021/069951
(87) Internationale Veröffentlichungsnummer: WO 2022/023074

(56) Entgegenhaltungen:
- EP-A1- 2 803 451
- DE-A1- 102011 082 787
- US-A1- 2009 298 658

## Beschreibung

### Stand der Technik

Die vorliegende Erfindung betrifft eine Handwerkzeugmaschine, insbesondere einen Schrauber, mit einem Gehäuse, in dem zumindest ein Antriebsmotor zum Antrieb einer Werkzeugaufnahme angeordnet ist, wobei der Antriebsmotor über einen Handschalter aktivierbar ist, und wobei die Werkzeugaufnahme zur Aufnahme eines Einsatzwerkzeugs ausgebildet ist, und mit einem Einsatzwerkzeugmagazin zur Lagerung einer Mehrzahl von auswählbaren Einsatzwerkzeugen.

Aus dem Stand der Technik ist eine derartige Handwerkzeugmaschine mit einem Einsatzwerkzeugmagazin bekannt. Zum Bewegen bzw. Verschieben eines im Einsatzwerkzeugmagazin angeordneten Einsatzwerkzeugs in die Werkzeugaufnahme der Handwerkzeugmaschine ist eine Schiebevorrichtung vorgesehen. Durch ein manuelles Bewegen bzw. Verschieben eines der Schiebevorrichtung zugeordneten Schiebeelements von einem Benutzer der Handwerkzeugmaschine in Längsrichtung, wird ein Einsatzwerkzeug vom Einsatzwerkzeugmagazin in die Werkzeugaufnahme verschoben.

In der DE 10 2011 082787 A1 ist eine motorisch betriebene Werkzeugmaschine mit einer Antriebseinheit und einem Werkzeugwechselmagazin offenbart, dessen Werkzeugkammern jeweils in eine Übergabelage an eine zu bestückende Werkzeugaufnahme verstellbar sind.

### Offenbarung der Erfindung

Die Erfindung betrifft eine Handwerkzeugmaschine, insbesondere einen Schrauber, mit einem Gehäuse, in dem zumindest ein Antriebsmotor zum Antrieb einer Werkzeugaufnahme angeordnet ist, wobei der Antriebsmotor über einen Handschalter aktivierbar ist, und wobei die Werkzeugaufnahme zur Aufnahme eines Einsatzwerkzeugs ausgebildet ist, und mit einem Einsatzwerkzeugmagazin zur Lagerung einer Mehrzahl von auswählbaren Einsatzwerkzeugen. Der Handschalter ist zum Beaufschlagen eines im Einsatzwerkzeugmagazin angeordneten, ausgewählten Einsatzwerkzeugs in axialer Richtung des Antriebsmotors von dem Einsatzwerkzeugmagazin in die Werkzeugaufnahme und zum Aktivieren des Antriebsmotors betätigbar.

Die Erfindung ermöglicht somit die Bereitstellung einer Handwerkzeugmaschine, bei der durch den Handschalter sowohl eine Aktivierung des Antriebsmotors, als auch ein Verschieben eines Einsatzwerkzeugs vom Einsatzwerkzeugmagazin in die Werkzeugaufnahme bewirkt werden kann, sodass insgesamt eine einfache und benutzerfreundliche Bedienung ermöglicht werden kann.

Vorzugsweise ist der Handschalter von einer unbeaufschlagten Ruheposition in eine Beaufschlagungsposition, in der das im Einsatzwerkzeugmagazin angeordnete, ausgewählte Einsatzwerkzeug in die Werkzeugaufnahme beaufschlagt wird, sowie in eine Arbeitsposition, in der der Antriebsmotor aktiviert wird, betätigbar.

Somit kann auf einfache Art und Weise ein multifunktionaler Handschalter bereitgestellt werden.

Bevorzugt ist dem Handschalter eine Beaufschlagungsvorrichtung mit einem Beaufschlagungselement zugeordnet, das in der Beaufschlagungsposition des Handschalters das im Einsatzwerkzeugmagazin angeordnete, ausgewählte Einsatzwerkzeug in die Werkzeugaufnahme beaufschlagt.

Somit kann eine sichere und zuverlässige Verschiebung des Einsatzwerkzeugs in die Werkzeugaufnahme ermöglicht werden.

Die Beaufschlagungsvorrichtung weist bevorzugt einen Hebelarm auf, der den Handschalter mit dem Beaufschlagungselement verbindet.

Somit kann leicht und unkompliziert eine Bewegung des Handschalters an die Beaufschlagungsvorrichtung übertragen werden.

Gemäß einer Ausführungsform ist der Hebelarm über einen Schieber mit dem Beaufschlagungselement verbunden, wobei der Schieber Aufnahmen aufweist und der Hebelarm Nocken, die in den Aufnahmen angeordnet sind.

Somit kann auf einfache Art und Weise eine Koppelung zwischen dem Hebelarm und der Beaufschlagungsvorrichtung ermöglicht werden.

Vorzugsweise ist an dem Schieber zumindest ein Zahnrad angeordnet und das Beaufschlagungselement weist einen zugeordneten Zahnstangenabschnitt zum Verfahren des Beaufschlagungselements in axialer Richtung des Antriebsmotors zum Beaufschlagen des im Einsatzwerkzeugmagazin angeordneten, ausgewählten Einsatzwerkzeugs in die Werkzeugaufnahme auf.

Somit kann ein sicheres und zuverlässiges Verschieben des im Einsatzwerkzeugmagazin angeordneten, ausgewählten Einsatzwerkzeugs in die Werkzeugaufnahme ermöglicht werden.

Bevorzugt weist die Beaufschlagungsvorrichtung ein Sperrelement auf, das in der Beaufschlagungsposition des Handschalters in einer Sperrstellung das Beaufschlagungselement arretiert.

Somit kann auf einfache Art und Weise ein ungewolltes Verfahren des Beaufschlagungselements verhindert werden.

Das Sperrelement ist vorzugsweise in der Sperrstellung zum Freigeben des Beaufschlagungselements manuell betätigbar.

Somit kann eine sichere und zuverlässige Freigabe des Beaufschlagungselements ermöglicht werden.

Gemäß einer Ausführungsform ist der in der Arbeitsposition angeordnete Handschalter zur Deaktivierung des Antriebsmotors von der Arbeitsposition in die Beaufschlagungsposition freigebbar, wobei eine Verstellung des Handschalters von der Beaufschlagungsposition in die Ruheposition nur bei einer Anordnung des Sperrelements in einer zugeordneten Freigabestellung erfolgt.

Somit kann einfach und unkompliziert ein ungewolltes Freigeben des in der Werkzeugaufnahme angeordneten Einsatzwerkzeugs verhindert werden.

Bevorzugt ist das Einsatzwerkzeugmagazin zur Auswahl eines Einsatzwerkzeugs von der Mehrzahl von Einsatzwerkzeugen über eine Magazinwelle drehbeweglich im oder am Gehäuse gelagert, wobei ein Verdrehen des Einsatzwerkzeugmagazins zur Auswahl eines Einsatzwerkzeugs von der Mehrzahl von Einsatzwerkzeugen durch ein manuelles Verdrehen des Einsatzwerkzeugmagazins durch einen Benutzer der Handwerkzeugmaschine um die Magazinwelle des Einsatzwerkzeugmagazins herum erfolgt.

Somit kann eine sichere und zuverlässige Bedienung des Einsatzwerkzeugmagazins ermöglicht werden.

Gemäß einer Ausführungsform ist ein Betätigungselement zum Betätigen des Einsatzwerkzeugmagazins vorgesehen, wobei ein Verschieben des Betätigungselements durch einen Benutzer der Handwerkzeugmaschine in Querrichtung der Magazinwelle des Einsatzwerkzeugmagazins ein Verdrehen des Einsatzwerkzeugmagazins um die Magazinwelle bewirkt.

Somit kann auf einfache Art und Weise ein Verdrehen des Einsatzwerkzeugmagazins zur Auswahl eines gewünschten Einsatzwerkzeugs erfolgen.

Bevorzugt sind dem Betätigungselement zumindest zwei Federelemente zugeordnet, die bei dem Verschieben des Betätigungselements in Querrichtung der Magazinwelle zum Verdrehen des Einsatzwerkzeugmagazins komprimierbar sind, wobei zwischen den zumindest zwei Federelementen ein gehäusefestes Abstützelement angeordnet ist.

Somit kann eine intuitive Betätigung des Betätigungselements ermöglicht werden.

Vorzugsweise ist der Handschalter an einem Handgriff der Handwerkzeugmaschine, das Sperrelement an einem von der Werkzeugaufnahme abgewandten Bereich des Gehäuses der Handwerkzeugmaschine, und das Einsatzwerkzeugmagazin, insbesondere das Betätigungselement, an einem der Werkzeugaufnahme und dem Handschalter zugewandten Bereich des Gehäuses der Handwerkzeugmaschine derart angeordnet, dass eine einhändige Bedienung ermöglicht wird.

Somit kann eine kompakte und bedienungsfreundliche Handwerkzeugmaschine bereitgestellt werden.

### Kurze Beschreibung der Zeichnungen

Die Erfindung ist anhand von in den Zeichnungen dargestellten Ausführungsbeispielen in der nachfolgenden Beschreibung näher erläutert. Es zeigen:
- Fig. 1: eine Seitenansicht einer Handwerkzeugmaschine mit einem Einsatzwerkzeugmagazin und einer Beaufschlagungsvorrichtung,
- Fig. 2: eine perspektivische Ansicht der Handwerkzeugmaschine von Fig. 1 mit geöffnetem Gehäuse in einer ersten Stellung der Beaufschlagungsvorrichtung,
- Fig. 3: eine Schnittansicht der Handwerkzeugmaschine von Fig. 2 bei geöffnetem Gehäuse in einer weiteren Stellung der Beaufschlagungsvorrichtung,
- Fig. 4: eine perspektivische Ansicht der Beaufschlagungsvorrichtung von Fig. 1 bis Fig. 3 mit einem der Handwerkzeugmaschine zugeordneten Handschalter, dem Einsatzwerkzeugmagazin, sowie einer Werkzeugaufnahme der Handwerkzeugmaschine in der Stellung der Beaufschlagungsvorrichtung von Fig. 3,
- Fig. 5: eine Draufsicht auf einen der Beaufschlagungsvorrichtung von Fig. 1 bis Fig. 4 zugeordneten Schieber,
- Fig. 6: eine Draufsicht auf den Schieber von Fig. 5, von einer Unterseite her betrachtet,
- Fig. 7: eine perspektivische Ansicht eines der Beaufschlagungsvorrichtung von Fig. 1 bis Fig. 4 zugeordneten Hebelarms,
- Fig. 8: eine Seitenansicht der Handwerkzeugmaschine von Fig. 1 mit einer alternativen Beaufschlagungsvorrichtung in einer ersten Stellung,
- Fig. 9: eine Seitenansicht der Handwerkzeugmaschine von Fig. 8 mit einer Zwischenstellung der Beaufschlagungsvorrichtung,
- Fig. 10: eine Seitenansicht der Handwerkzeugmaschine von Fig. 8 und Fig. 9 mit einer weiteren Stellung der Beaufschlagungsvorrichtung,
- Fig. 11: eine perspektivische Ansicht des Einsatzwerkzeugmagazins von Fig. 8 bis Fig. 10 mit einem Betätigungselement,
- Fig. 12: eine Vorderansicht des Einsatzwerkzeugmagazins von Fig. 11, und
- Fig. 13: eine perspektivische Ansicht der Handwerkzeugmaschine von Fig. 8 bis Fig. 10 mit einem alternativen Einsatzwerkzeugmagazin.

### Beschreibung der Ausführungsbeispiele

In den Figuren werden Elemente mit gleicher oder vergleichbarer Funktion mit identischen Bezugszeichen versehen und nur einmal genauer beschrieben.

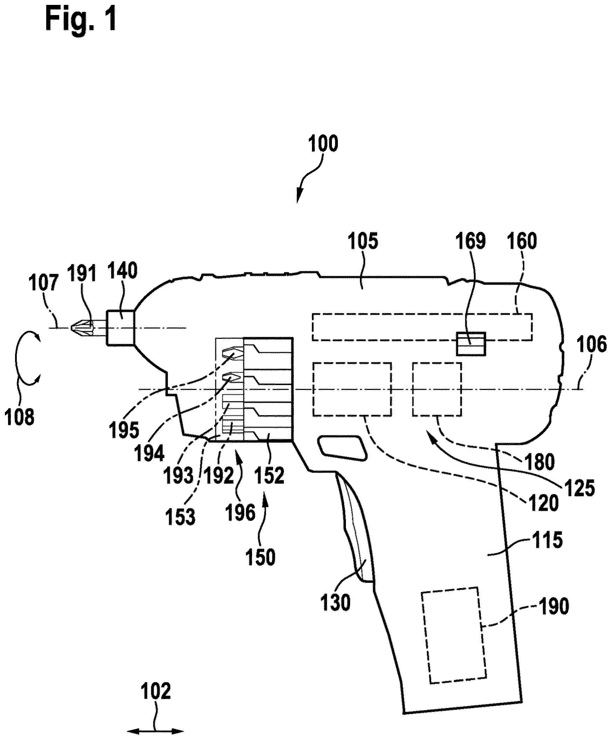

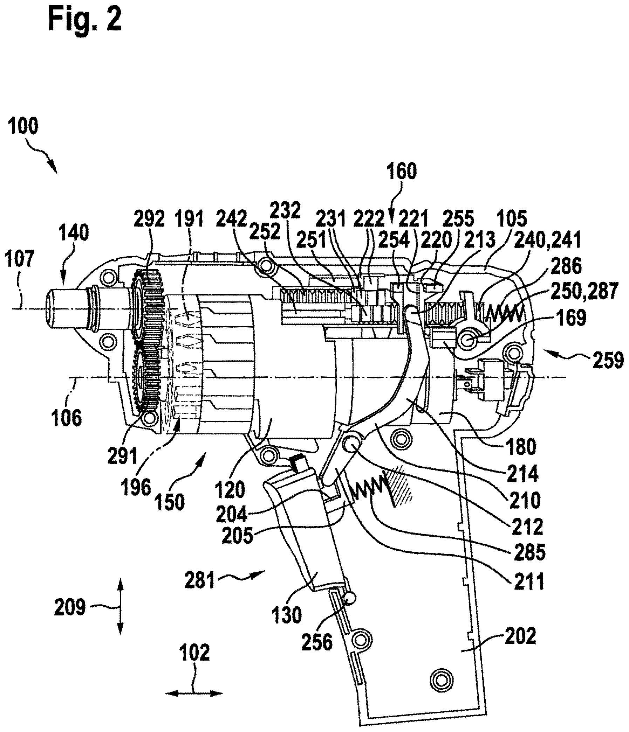

Fig. 1 zeigt eine beispielhaft als Schrauber ausgebildete Handwerkzeugmaschine 100 mit einem Gehäuse 105, in dem zumindest eine Antriebseinheit 125 angeordnet ist. Das Gehäuse 105 ist vorzugsweise aus zwei Halbschalen (202 in Fig. 2) ausgebildet.

Bevorzugt weist die Antriebseinheit 125 zumindest einen Antriebsmotor 180 zum Antrieb einer Werkzeugaufnahme 140 der Handwerkzeugmaschine 100 auf. Der Antriebsmotor 180 ist über einen Handschalter 130 aktivierbar. Der Handschalter 130 ist an einem Handgriff 115 des Gehäuses 105 angeordnet.

Gemäß einer Ausführungsform ist der Antriebseinheit 125 ein Getriebe 120 zugeordnet. Bevorzugt ist das Getriebe 120 als Planetengetriebe ausgebildet.

Die Werkzeugaufnahme 140 ist zur Aufnahme eines ausgewählten Einsatzwerkzeugs 191 von einer Mehrzahl von Einsatzwerkzeugen 196 ausgebildet. Durch eine Aktivierung des Antriebsmotors 180 kann das in der Werkzeugaufnahme 140 angeordnete Einsatzwerkzeug 191 illustrativ mit der Werkzeugaufnahme 140 rotieren.

Die Handwerkzeugmaschine 100 weist bevorzugt ein Einsatzwerkzeugmagazin 150 zur Lagerung einer Mehrzahl von auswählbaren Einsatzwerkzeugen 196 auf. Im Einsatzwerkzeugmagazin 150 ist illustrativ eine Mehrzahl von Einsatzwerkzeugen 196, bzw. Einsatzwerkzeuge 192, 193, 194, 195 angeordnet. Das in der Werkzeugaufnahme 140 angeordnete Einsatzwerkzeug 191 ist ebenfalls der Mehrzahl von Einsatzwerkzeugen 196 zugeordnet. Das Einsatzwerkzeug 191 ist in Fig. 1 vom Einsatzwerkzeugmagazin 150 in die Werkzeugaufnahme 140 beaufschlagt bzw. verschoben und kann nach einer Benutzung wieder ins Einsatzwerkzeugmagazin 150 zurückgeschoben werden. Zur Auswahl eines im Einsatzwerkzeugmagazin 150 angeordneten Einsatzwerkzeugs der Einsatzwerkzeuge 191-195 ist das Einsatzwerkzeugmagazin 150 in Umfangsrichtung 108 drehbar.

Bevorzugt ist der Antriebseinheit 125 eine Antriebsachse 106 zugeordnet. Des Weiteren ist der Werkzeugaufnahme 140 eine Abtriebsachse 107 zugeordnet. Die Antriebsachse 106 ist zum Antrieb der Abtriebsachse 107 ausgebildet. Vorzugsweise sind die Antriebsachse 106 und die Abtriebsachse 107 parallel zueinander angeordnet. Bevorzugt ist das Einsatzwerkzeugmagazin 150 auf der Antriebsachse 106 angeordnet.

Das Einsatzwerkzeugmagazin 150 weist ein in seiner Längsachse drehbares, ring- oder trommelartiges Gehäuse 152, 153 auf, das bevorzugt in Längsrichtung zweigeteilt ist. Ein erstes Gehäuseteil 152 besteht vorzugsweise aus einem nicht durchsichtigen Kunststoffmaterial, während ein sich in Längsrichtung an das erste Gehäuseteil 152 anschließendes zweites Gehäuseteil 153 bevorzugt aus transparentem Kunststoff ausgebildet ist. Das erste Gehäuseteil 152 kann zur manuellen Verstellung des Einsatzwerkzeugmagazins 150 in der Handwerkzeugmaschine 100 dienen und beispielsweise mit Riffelungen o.ä. ausgestattet sein, um ein einfaches und genaues Verstellen des Einsatzwerkzeugmagazins 150 für einen Benutzer zu ermöglichen.

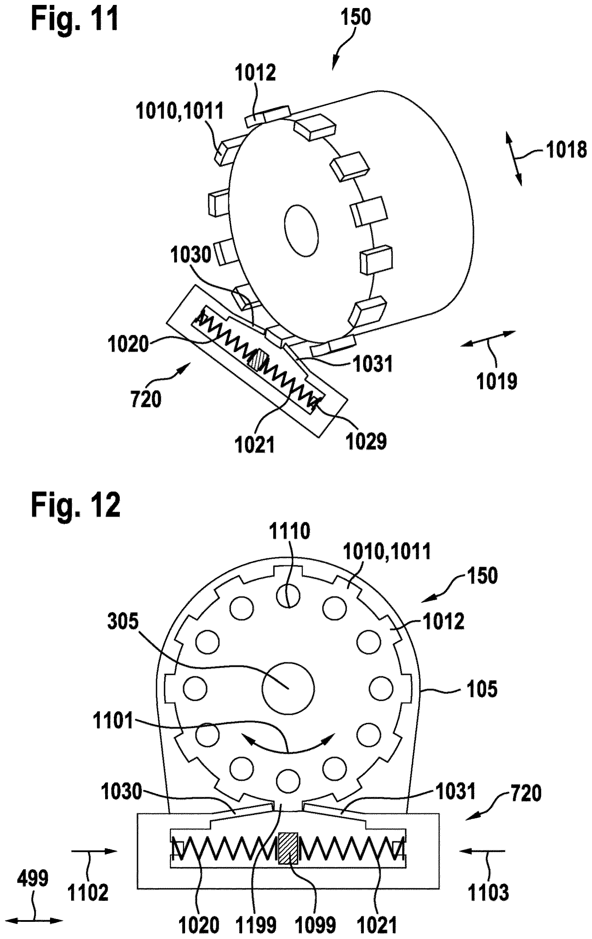

Innerhalb des Gehäuses sind in gleichmäßigen Winkelabständen zueinander angeordnete Aufnahmen (1110 in Fig. 12) zur Aufnahme jeweils eines Einsatzwerkzeugs 191, 192, 193, 194, 195 ausgebildet. Die Aufnahmen sind derart ausgebildet, dass die Einsatzwerkzeuge 191, 192, 193, 194, 195 jeweils mittels eines stiftförmigen Elements in die jeweilige Aufnahme eingeschoben bzw. eingeführt werden können, wozu die Aufnahmen an ihren beiden einander gegenüberliegenden Stirnseiten beispielsweise entsprechende Öffnungen bzw. Durchbrüche aufweisen. Insbesondere sind die Einsatzwerkzeuge 192, 193, 194, 195 als sogenannte BIT-Werkzeuge ausgebildet, die unterschiedliche Werkzeugspitzen aufweisen, um unterschiedliche Befestigungselemente, insbesondere unterschiedliche Schrauben, ein- bzw. ausschrauben zu können.

Das zweite, transparente Gehäuseteil 153 ist in dem Bereich der Einsatzwerkzeuge 192, 193, 194, 195 angeordnet, in dem sich auch die Spitzen der Einsatzwerkzeuge 192, 193, 194, 195 befinden. Dadurch wird es für einen Benutzer ermöglicht, von außerhalb der Handwerkzeugmaschine 100 zu erkennen, welches Einsatzwerkzeug 192, 193, 194, 195 sich in einer jeweiligen Aufnahme befindet, da die Spitze jedes Einsatzwerkzeugs ein charakteristisches Merkmal für das Einsatzwerkzeug 192, 193, 194, 195 darstellt.

Der Handschalter 130 ist vorzugsweise zum Beaufschlagen bzw. Verschieben eines im Einsatzwerkzeugmagazin 150 angeordneten, ausgewählten Einsatzwerkzeugs 191 in axialer Richtung bzw. Längsrichtung 102 der Antriebseinheit 125, bzw. des Antriebsmotors 180, von dem Einsatzwerkzeugmagazin 150 in die Werkzeugaufnahme 140 betätigbar. Ebenfalls ist der Handschalter 130 bevorzugt zum Aktivieren des Antriebsmotors 180 betätigbar.

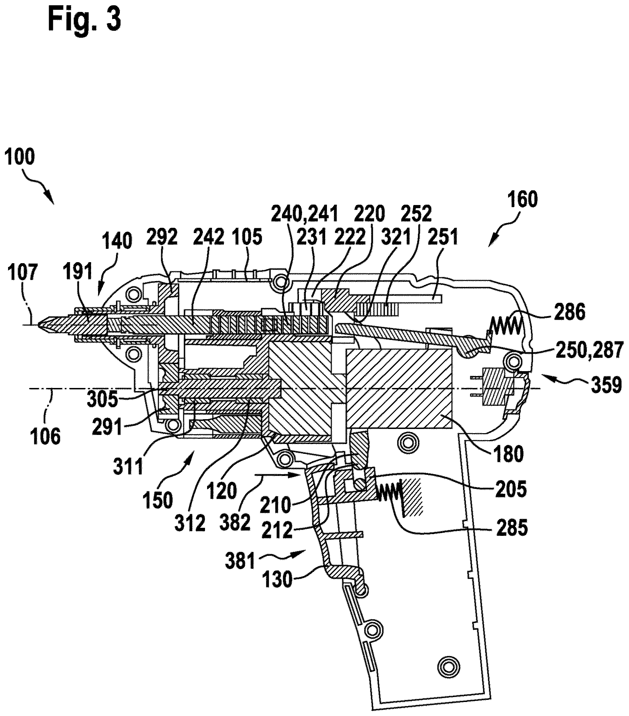

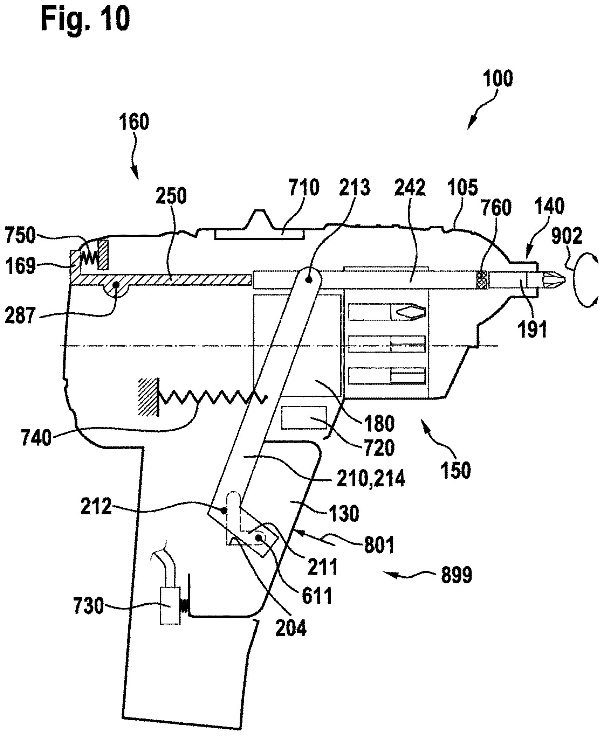

Bevorzugt ist der Handschalter 130 von einer unbeaufschlagten Ruheposition (281 in Fig. 2) in eine Beaufschlagungsposition (381 in Fig. 3) und/oder in eine Arbeitsposition (899 in Fig. 10) beaufschlagbar bzw. betätigbar. In der unbeaufschlagten Ruheposition (281 in Fig. 2) betätigt ein Benutzer der Handwerkzeugmaschine 100 den Handschalter 130 nicht. Des Weiteren beaufschlagt ein Benutzer der Handwerkzeugmaschine 100 in der Beaufschlagungsposition (381 in Fig. 3) den Handschalter 130 um einen ersten Verfahrweg ausgehend von der Ruheposition. Hierbei wird in der Beaufschlagungsposition (381 in Fig. 3) das im Einsatzwerkzeugmagazin 150 angeordnete, ausgewählte Einsatzwerkzeug 191 in die Werkzeugaufnahme 140 beaufschlagt bzw. geschoben. Darüber hinaus ist in der Arbeitsposition (899 in Fig. 10) der Handschalter 130 um einen weiteren Beaufschlagungsweg ausgehend von der Beaufschlagungsposition beaufschlagt. Bevorzugt wird in der Arbeitsposition (899 in Fig. 10) des Handschalters 130 der Antriebsmotor 180 aktiviert.

Vorzugsweise ist dem Handschalter 130 eine Beaufschlagungsvorrichtung 160 zugeordnet. Die Beaufschlagungsvorrichtung 160 beaufschlagt in der Beaufschlagungsposition (381 in Fig. 3) des Handschalters 130 das im Einsatzwerkzeugmagazin 150 angeordnete, ausgewählte Einsatzwerkzeug 191 in die Werkzeugaufnahme 140. Der Beaufschlagungsvorrichtung 160 ist zum Entriegeln ein Entriegelungselement 169 zugordnet.

Gemäß einer Ausführungsform ist die Handwerkzeugmaschine 100 zur netzunabhängigen Stromversorgung mechanisch und elektrisch mit einem Akkupack 190 verbindbar, kann alternativ hierzu z.B. aber auch netzabhängig betreibbar sein.

Fig. 2 zeigt die Handwerkzeugmaschine 100 von Fig. 1, wobei das Gehäuse 105 illustrativ geöffnet ist, bzw. lediglich eine Halbschale 202 des Gehäuses 105 gezeigt ist. Fig. 2 verdeutlicht den Aufbau der Antriebseinheit 125 mit dem Antriebsmotor 180 sowie das Einsatzwerkzeugmagazin 150 und die Beaufschlagungsvorrichtung 160.

Der Beaufschlagungsvorrichtung 160 ist vorzugsweise ein Beaufschlagungselement 242 zugeordnet, das das in der Beaufschlagungsposition (381 in Fig. 3) des Handschalters 130 im Einsatzwerkzeugmagazin 150 angeordnete, ausgewählte Einsatzwerkzeug 191 in die Werkzeugaufnahme 140 beaufschlagt bzw. verschiebt. In Fig. 2 ist das Einsatzwerkzeug 191 im Einsatzwerkzeugmagazin 150 angeordnet. Des Weiteren weist die Beaufschlagungsvorrichtung 160 vorzugsweise einen Hebelarm 210 auf, der den Handschalter 130 mit dem Beaufschlagungselement 242 verbindet. Vorzugsweise ist der Hebelarm 210 über einen Schieber 220 mit dem Beaufschlagungselement 242 verbunden. Hierbei weist der Schieber 220 Aufnahmen 221 auf und der Hebelarm 210 weist Nocken 213 auf, die in den Aufnahmen 221 angeordnet sind. An dem Schieber 220 ist zumindest ein Zahnrad 231, 232 angeordnet.

Das Beaufschlagungselement 242 weist bevorzugt einen länglichen Grundkörper 240 auf. Des Weiteren weist das Beaufschlagungselement 242 vorzugsweise einen von der Werkzeugaufnahme 140 abgewandt angeordneten Zahnstangenabschnitt 241 zum Verfahren bzw. Verschieben des Beaufschlagungselements 242 in axialer Richtung bzw. Längsrichtung 102 des Antriebsmotors 180 auf. Der Zahnstangenabschnitt 241 weist seitlich bzw. den Gehäusehalbschalen 202 zugewandte Verzahnungen auf. Dabei erfolgt bei einem Verfahren des Beaufschlagungselements 242 in axialer Richtung 102 ein Beaufschlagen bzw. Verschieben des im Einsatzwerkzeugmagazin 150 angeordneten, ausgewählten Einsatzwerkzeugs 191 in die Werkzeugaufnahme 140.

Darüber hinaus weist die Beaufschlagungsvorrichtung 160 bevorzugt ein Sperrelement 250 auf. Das Sperrelement 250 arretiert vorzugsweise in der Beaufschlagungsposition (381 in Fig. 3) des Handschalters 130 in einer Sperrstellung (359 in Fig. 3) das Beaufschlagungselement 242. Des Weiteren ist das Sperrelement 250 in einer Sperrstellung (359 in Fig. 3) zum Freigeben des Beaufschlagungselements 242 manuell betätigbar.

In Fig. 2 ist der Handschalter 130 in seiner Ruheposition 281 angeordnet. Bevorzugt beaufschlagt ein Federelement 285 den Handschalter 130 in diese Ruheposition 281. Jedoch ist der Handschalter 130 in seiner Ruheposition nicht von einem Benutzer beaufschlagt bzw. betätigt. Das Federelement 285 ist dabei gehäusefest angeordnet.

Der Handschalter 130 weist vorzugsweise zumindest ein Nockenelement 256 auf, durch das der Handschalter 130 in zumindest einer der zwei Gehäusehalbschalen 202 drehbar gelagert ist. Darüber hinaus weist der Handschalter 130 ein Führelement 205, das eine Aufnahme 204 ausbildet, auf. Vorzugsweise ist die Aufnahme 204 L-förmig ausgebildet.

Der Hebelarm 210 ist vorzugsweise über zumindest ein Lagerungselement 212 in zumindest einer Gehäusehalbschale 202 drehbar gelagert. Das Lagerungselement 212 ist dabei vorzugsweise an einem Aufnahmeabschnitt 211 angeordnet. Der Aufnahmeabschnitt 211 ist vorzugsweise in der Aufnahme 204 des Handschalters 130 angeordnet. An seinem dem Handschalter 130 abgewandten Ende weist der Hebelarm 210 einen Hebelabschnitt 214 auf. Der Hebelabschnitt 214 weist an seinem dem Schieber 220 zugewandten Ende die Nocken 213 auf. Gemäß einer Ausführungsform ist der Hebelabschnitt 214 gabelförmig, bzw. U-förmig, ausgebildet, wobei der Antriebsmotor 180 durch den Hebelabschnitt 214 umgriffen wird. Vorzugsweise weist der U-förmige Hebelabschnitt 214 an seinem dem Handschalter 130 abgewandten Ende jeweils einen Nocken 213 auf.

Der Schieber 220 weist bevorzugt an seinen den jeweiligen Gehäusehalbschalen 202 zugewandten Seiten bzw. in Vertikalrichtung 209 der Handwerkzeugmaschine 100 jeweils eine Aufnahme 221 zum Führen des Nockens 213 des Hebelarms 210 auf. Des Weiteren weist der Schieber 220 zumindest ein Führungselement 254, 255 zum Führen in axialer Richtung bzw. Längsrichtung 102 in einer den Gehäusehalbschalen 202 zugewandten Führungsnut 251 auf. Darüber hinaus weist der Schieber 220 zumindest einen, bevorzugt zwei in Vertikalrichtung 209 ausgebildete Lagerungszapfen 222 auf. Die vorzugsweise zwei Lagerungszapfen 222 sind zur Lagerung des zumindest einen Zahnrads 231, 232 ausgebildet. Bevorzugt sind auf jedem Lagerungszapfen 222 jeweils zwei Zahnräder 231, 232 angeordnet. Dabei ist ein, illustrativ in Fig. 2 oberes, Zahnrad 231 mit einer Verzahnung 252 der Gehäusehalbschale 202 wirkverbunden. Das, illustrativ in Fig. 2 untere, Zahnrad 232 ist vorzugsweise mit dem Zahnstangenabschnitt 241 des Beaufschlagungselements 242 wirkverbunden.

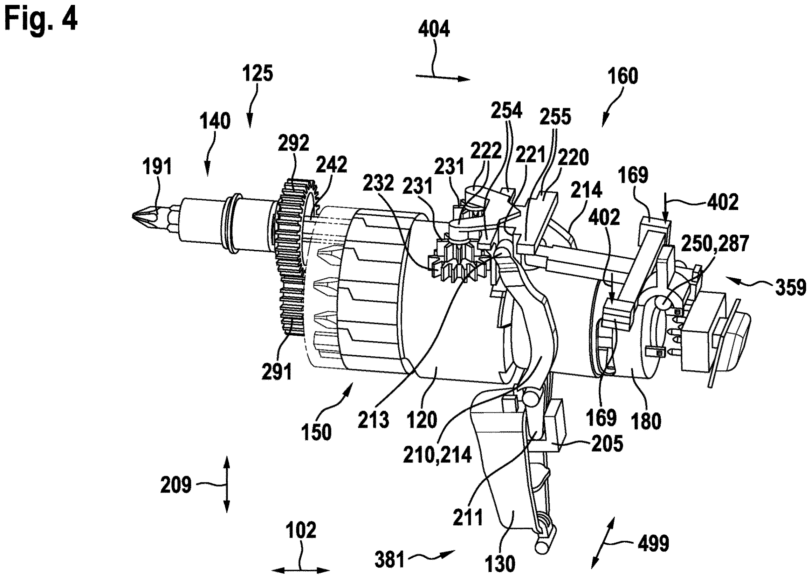

Darüber hinaus ist in Fig. 2 das Sperrelement 250 in seiner Freigabestellung 259 angeordnet. In seiner Freigabestellung 259 ist das Sperrelement 250 bevorzugt parallel zum Beaufschlagungselement 242 angeordnet. Bevorzugt weist das Sperrelement 250 einen länglichen Grundkörper, der in Fig. 2 in Längsrichtung 102 angeordnet ist, sowie zumindest ein, illustrativ zwei Entriegelungselemente 169 auf. Die Entriegelungselemente 169 sind bevorzugt in Querrichtung (499 in Fig. 4) zur Längsachse 102 am Sperrelement 250 angeordnet.

Gemäß einer Ausführungsform sind die Entriegelungselemente 169 einstückig mit dem Sperrelement 250 ausgebildet. Bevorzugt durchdringen die zwei Entriegelungselemente 169 jeweils eine Ausnehmung der Gehäusehalbschalen 202. Somit kann ein Benutzer die Entriegelungselemente 169 zum Entriegeln bzw. Freigeben des Sperrelements 250 betätigen. Vorzugsweise ist dem Sperrelement 250 ein Federelement 286 zugeordnet. Das Federelement 286 spannt das Sperrelement 250 vor. Des Weiteren weist das Sperrelement 250 einen Drehpunkt 287 auf, um den es zur Verbringung von der Freigabestellung 259 in seine Sperrstellung (359 in Fig. 3) oder umgekehrt drehbar ist. Der Drehpunkt 287 ist dabei gehäusefest bzw. am Gehäuse 105, insbesondere den Gehäusehalbschalen 202, gelagert.

Darüber hinaus verdeutlicht Fig. 2 die parallele Anordnung der Antriebsachse 106 zur Abtriebsachse 107, wobei die beiden Achsen 106, 107 in Vertikalrichtung 209 voneinander beabstandet sind. Vorzugsweise ist der Antriebsachse 106 ein Zahnrad 291 zugeordnet und der Abtriebsachse 107 ist ein Zahnrad 292 zugeordnet, wobei die beiden Achsen 106, 107 über die beiden Zahnräder 291, 292 miteinander wirkverbunden sind.

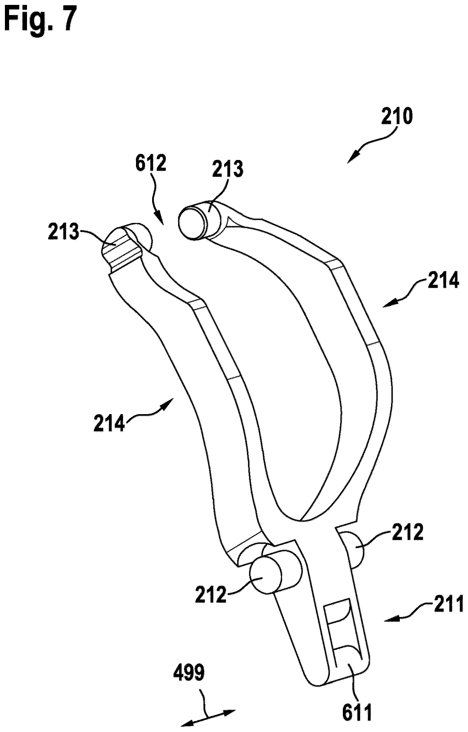

Bevorzugt weist der Hebelarm 210 eine Aufnahme (612 in Fig. 7) auf, wobei der Schieber 220 mit den Zahnrädern 231, 232, das Sperrelement 250 und das Beaufschlagungselement 242, sowie der Antriebsmotor 180 innerhalb der Aufnahme (612 in Fig. 7) angeordnet sind. Insbesondere umgreift der Hebelabschnitt 214 des Hebelarms 210 den Schieber 220 mit den Zahnrädern 231, 232, das Sperrelement 250, das Beaufschlagungselement 242, sowie den Antriebsmotor 180.

Fig. 3 zeigt die Handwerkzeugmaschine 100 von Fig. 2 mit der Beaufschlagungsvorrichtung 160, wobei der Handschalter 130 durch ein Beaufschlagen bzw. Betätigen in Richtung eines Pfeils 382 von einem Benutzer in eine Beaufschlagungsposition 381 bewegt ist. Durch die Anordnung des Handschalters 130 in der Beaufschlagungsposition 381 wird das Federelement 285 teilweise komprimiert. Darüber hinaus wird der Hebelarm 210 um sein Lagerungselement 212, illustrativ gegen den Uhrzeigersinn, bzw. mit seinen Nocken 213 von Fig. 2 zur Werkzeugaufnahme 140 hin verdreht. Dadurch beaufschlagen die Nocken 213 des Hebelarms 210 den Schieber 220, wodurch der Schieber 220 in Fig. 3 illustrativ nach links, bzw. zur Werkzeugaufnahme 140 hin verschoben wird. Bei dem Verschieben des Schiebers 220 bewegt sich das Zahnrad 231 an der Verzahnung 252 im Gehäuse 105.

Bevorzugt ist das Beaufschlagungselement 242 in einem Aufnahmeabschnitt 321 des Schiebers 220 angeordnet. Der Aufnahmeabschnitt 321 ist dabei in Querrichtung (499 in Fig. 4), bzw. mittig zwischen den beiden Lagerungszapfen 222 des Schiebers 220, ausgebildet. Das Zahnrad 232 verschiebt das Beaufschlagungselement 242 vorzugsweise über den Verzahnungsabschnitt 241 in Längsrichtung 102 (s. Fig. 1 und Fig. 2) zur Werkzeugaufnahme 140. Durch die Bewegung des Beaufschlagungselements 242 zur Werkzeugaufnahme 140 wird das Einsatzwerkzeug 191 vom Einsatzwerkzeugmagazin 150 in die Werkzeugaufnahme 140 beaufschlagt bzw. verschoben. Aufgrund der Verschiebung des Beaufschlagungselements 242 zur Werkzeugaufnahme 140 hin, wird der Aufnahmeabschnitt 321 vom Beaufschlagungselement 242 freigegeben, sodass sich das Sperrelement 250 über seinen Drehpunkt 287 in seine Sperrstellung 359 verschwenkt. Hierdurch wird das Beaufschlagungselement 242 durch das Sperrelement 250 in Längsrichtung 102 (s. Fig. 1 und Fig. 2) arretiert.

Bevorzugt ist dem Einsatzwerkzeugmagazin 150 eine Magazinwelle 305 zugeordnet. Vorzugsweise ist das Einsatzwerkzeugmagazin 150 über zwei Lagerelemente 311, 312 auf der Magazinwelle 305 gelagert. Gemäß einer Ausführungsform ist die Magazinwelle 305 der Antriebsachse 106 zugeordnet. Bevorzugt bildet die Magazinwelle 305 die Antriebsachse 106 aus. Zur Auswahl eines Einsatzwerkzeugs 191 von der Mehrzahl von Einsatzwerkzeugen 196 von Fig. 1 und Fig. 2 ist das Einsatzwerkzeugmagazin 150 über die Magazinwelle 305 drehbeweglich in oder am Gehäuse 105 gelagert. Bevorzugt erfolgt ein Verdrehen des Einsatzwerkzeugmagazins 150 zur Auswahl eines Einsatzwerkzeugs 191 von der Mehrzahl von Einsatzwerkzeugen 196 durch ein manuelles Verdrehen des Einsatzwerkzeugmagazins 150 durch einen Benutzer der Handwerkzeugmaschine 100. Dabei erfolgt ein Verdrehen des Einsatzwerkzeugmagazins 150 um die Magazinwelle 305.

Fig. 4 zeigt die Antriebseinheit 125 der Handwerkzeugmaschine 100 von Fig. 1 bis Fig. 3 mit dem Antriebsmotor 180, dem Getriebe 120, dem Einsatzwerkzeugmagazin 150, der Werkzeugaufnahme 140, sowie dem Handschalter 130 mit der Beaufschlagungsvorrichtung 160. Illustrativ ist in Fig. 4 der Handschalter 130 in der Beaufschlagungsposition 381 angeordnet.

Insbesondere verdeutlicht Fig. 4 den Schieber 220 mit seinen in Vertikalrichtung 209 ausgebildeten Aufnahmen 221, in denen die Nocken 213 des Hebelarms 210 angeordnet sind. Darüber hinaus verdeutlicht Fig. 4 die Lagerungszapfen 222 des Schiebers 220, an denen die Zahnräder 231, 232 gelagert sind. Die Lagerungszapfen 222 sind vorzugsweise in Querrichtung 499 voneinander beabstandet, sodass jeweils ein Lagerungszapfen 222 mit zugeordneten Zahnrädern 231, 232 seitlich vom Beaufschlagungselement 242 angeordnet ist. Andersherum ist das Beaufschlagungselement 242 zwischen den Lagerungszapfen 222 mit den zugeordneten Zahnrädern 231, 232 angeordnet.

Des Weiteren zeigt Fig. 4 die Führungsstege 254, 255 des Schiebers 220. Bevorzugt weist der Schieber 220 jeweils zwei gegenüberliegende Führungsstege 254, 255 zum Führen in der Führungsnut 251 von Fig. 2 und Fig. 3 des Gehäuses 105 von Fig. 1 auf. Die Führungsstege 254, 255 sind dabei in Querrichtung 499 ausgebildet. Dabei sind die Führungsstege 254 in Längsrichtung 102 der Werkzeugaufnahme 140 zugewandt angeordnet und die Führungsstege 255 sind dem Sperrelement 250 zugewandt angeordnet. Bevorzugt sind die Aufnahmen 221 in Längsrichtung 102 zwischen den Führungsstegen 254, 255 angeordnet.

Des Weiteren ist das Sperrelement 250 in Fig. 4 in seiner Sperrstellung 359 angeordnet, in der das Beaufschlagungselement 242 vom Sperrelement 250 blockiert wird. Darüber hinaus verdeutlicht Fig. 4 das Sperrelement 250 mit seinen beiden in Querrichtung 499 ausgebildeten Entriegelungselementen 169. Die Entriegelungselemente 169 sind dabei vorzugsweise senkrecht am Grundkörper des Sperrelements 250 angeordnet. Durch ein Beaufschlagen zumindest eines Entriegelungselements 169 illustrativ nach unten, bzw. in Richtung eines Pfeils 402, wird das Sperrelement 250 über seinen Drehpunkt 287 verkippt, wobei das Sperrelement 250 das Beaufschlagungselement 242 freigibt. Aufgrund der Freigabe des Beaufschlagungselements 242 bewegt sich der Schieber 220 illustrativ nach rechts, bzw. entlang eines Pfeils 404, zurück, wodurch der Hebelarm 210 den Handschalter 130 freigibt und der Handschalter 130 durch das Federelement 285 von Fig. 2 und Fig. 3 in die Ruheposition 281 von Fig. 2 bewegt wird.

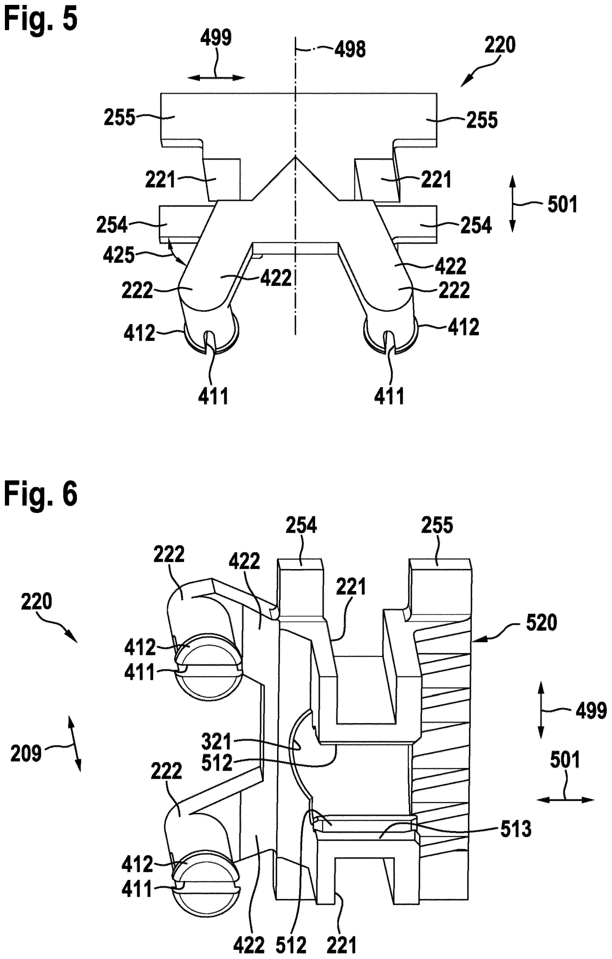

Fig. 5 zeigt den Schieber 220 der Beaufschlagungsvorrichtung 160 von Fig. 1 bis Fig. 4. Der Schieber 220 weist zwei Führungsstege 254, 255 auf, die in Längserstreckung 501 des Schiebers 220 voneinander beabstandet angeordnet sind. Bevorzugt ist die Längsrichtung 501 des Schiebers 220 im zusammengebauten Zustand der Beaufschlagungsvorrichtung 160 parallel zur Längsrichtung 102 der Antriebseinheit 125 von Fig. 1 bis Fig. 4. Zwischen den beiden Führungsstegen 254, 255 sind jeweils die Aufnahmen 221 zur Führung des Hebelarms 210 von Fig. 2 bis Fig. 4 angeordnet. Die Führungsstege 254, 255 sind dabei senkrecht zur Längserstreckung 501 ausgebildet.

Darüber hinaus ist am Führungssteg 254 bevorzugt ein Verbindungssteg 422 angeordnet, an dessen freiem Ende vorzugsweise der Lagerungszapfen 222 ausgebildet ist. Der Lagerungszapfen 222 ist dabei zumindest annähernd zylinderförmig ausgebildet. Der Lagerungszapfen 222 ist senkrecht zur Blattebene ausgebildet und weist an seinem freien Ende vorzugsweise einen Haltesteg 412 auf. Der Haltesteg 412 weist einen größeren Durchmesser als der Lagerungszapfen 222 auf.

Des Weiteren weist der Lagerungszapfen 222 an seinem freien Ende bevorzugt zumindest einen Schlitz 411 auf. Durch den zumindest einen Schlitz 411 ist der Lagerungszapfen 222 an seinem freien Ende federelastisch ausgebildet. Durch die federelastische Ausbildung des Lagerungszapfens 222 können die Zahnräder 231, 232 von Fig. 2 und Fig. 4 auf den Lagerungszapfen 222 aufgeschoben werden. Bevorzugt ist der Verbindungssteg 422 in einem Winkel 425 zum Führungssteg 254, bzw. zur Querrichtung 499, angeordnet. Darüber hinaus ist dem Schieber 222 in Fig. 5 illustrativ eine Symmetrieachse 498 zugeordnet.

Fig. 6 zeigt den Schieber 220 von Fig. 5, von einer Unterseite her betrachtet. Dabei verdeutlicht Fig. 6 die Lagerungszapfen 222 mit ihrem Haltesteg 412 und den zumindest einen Schlitz 411. Des Weiteren zeigt Fig. 6 die Aufnahmen 221, die in Vertikalrichtung 209 ausgebildet sind. Die Aufnahmen 221 bilden den mittigen Aufnahmebereich 321 zur Aufnahme des Beaufschlagungselements 242 von Fig. 2 bis Fig. 4 aus. Der Aufnahmebereich 321 ist dabei in Längsrichtung 501 des Schiebers 220 ausgebildet.

Zur sicheren Anordnung des Beaufschlagungselements 242 im Aufnahmebereich 321 ist bevorzugt zumindest ein in Querrichtung 499 bzw. in radialer Richtung des Aufnahmebereichs 321 ausgebildeter Raststeg 512 vorgesehen. Bevorzugt sind zwei Raststege 512 vorgesehen, wobei die Raststege 512 an einer den Aufnahmen 221 zugeordneten und dem Aufnahmebereich 321 zugewandten Seite angeordnet sind. Darüber hinaus weisen die Aufnahmen 221 an Ihrer dem Aufnahmebereich 321 zugewandten Seite, im Bereich ihres freien Endes, einen Aufnahmeabschnitt 513 auf. Bevorzugt ist das Sperrelement 250 von Fig. 2 bis Fig. 4 in seiner Freigabestellung 259 im Aufnahmeabschnitt 513 angeordnet und in seiner Sperrstellung 359 im Aufnahmebereich 321. Des Weiteren weist der Schieber 220 an den Führungsstegen 255 bevorzugt Verstärkungsrippen 520 auf.

Fig. 7 zeigt den Hebelarm 210 der Beaufschlagungsvorrichtung 160 von Fig. 2 bis Fig. 4. Dabei verdeutlicht Fig. 7 den Aufnahmeabschnitt 211 mit den vorzugsweise zwei gegenüberliegend angeordneten Lagerungselementen 212. Die Lagerungselemente 212 sind in Querrichtung 499 bzw. senkrecht nach außen gerichtet am Aufnahmeabschnitt 211, insbesondere an einem dem Hebelabschnitt 214 zugewandten Bereich des Aufnahmeabschnitts 211, angeordnet. Wie oben beschrieben, lagern die Lagerungselemente 211 den Hebelarm 210 im Gehäuse 105 der Handwerkzeugmaschine 100 von Fig. 1 bis Fig. 3 und bilden bevorzugt eine Drehachse aus. Darüber hinaus ist an einem vom Hebelabschnitt 214 abgewandten Ende des Aufnahmeabschnitts 211 ein Beaufschlagungszapfen 611 angeordnet. Der Beaufschlagungszapfen 611 wird durch den Handschalter 130 von Fig. 1 bis Fig. 4 beaufschlagt, wodurch der Hebelarm 210 um seine Drehachse bzw. die Lagerungselemente 212 verschwenkt wird.

Des Weiteren verdeutlicht Fig. 7 die Hebelabschnitte 214 mit ihren in Querrichtung 499 bzw. nach innen gerichteten Nocken 213 zur Anordnung in den Aufnahmen 221 des Schiebers 220 von Fig. 5 und Fig. 6. Wie oben beschrieben, bilden die Hebelabschnitte 214 zumindest annähernd eine U-Form mit einer Aufnahme 612 aus. In der Aufnahme 612 ist der Antriebsmotor 180 von Fig 1 bis Fig. 4 angeordnet, d.h. die Hebelabschnitte 214 umgreifen den Antriebsmotor 180.

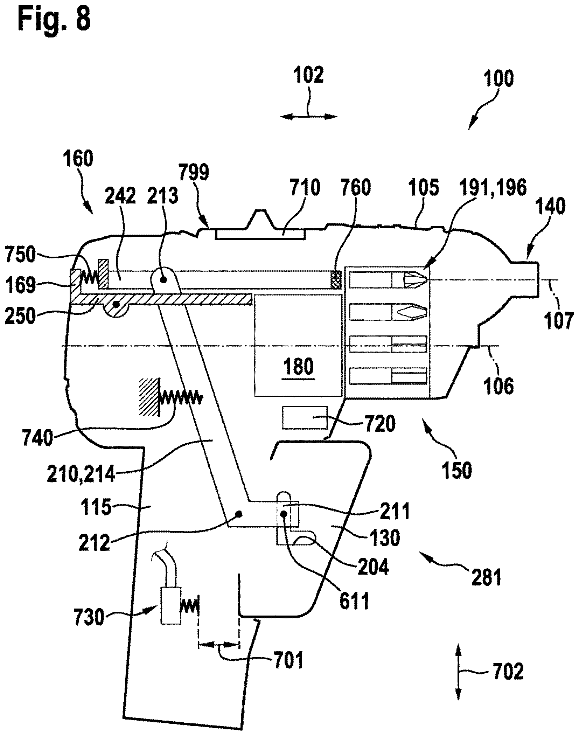

Fig. 8 zeigt die Handwerkzeugmaschine 100 von Fig. 1 bis Fig. 3 mit dem Handschalter 130 in der Ruhestellung 281. Dem Handschalter 130 ist ein Ein-Aus-Schalter 730 zugeordnet, der zum Aktivieren des Antriebsmotors 180 ausgebildet ist. In der Ruheposition 281 ist zwischen dem Handschalter 130 und dem Ein-Aus-Schalter 730 ein Abstand 701 ausgebildet.

Gemäß der in Fig. 8 gezeigten Ausführungsform ist der Hebelarm 210 durch eine gehäusefeste Feder 740 in eine Ruhestellung beaufschlagt. In der in Fig. 8 gezeigten Ausführungsform ist der Hebelarm 210 L-förmig ausgebildet und bevorzugt direkt mit dem Beaufschlagungselement 242 über zumindest einen Nocken 213 verbunden. Der Hebelarm 210 kann dabei einen Hebelabschnitt 214 aufweisen, der seitlich am Antriebsmotor 180 angeordnet ist, oder wie in Fig. 2 bis Fig. 4 gezeigt zwei Hebelabschnitte 214 aufweisen.

Darüber hinaus ist das Sperrelement 250 illustrativ durch ein Federelement 750 gegen das Beaufschlagungselement 242 vorgespannt. Dabei weist das Sperrelement 250 lediglich ein Entriegelungselement 169 auf. Vorzugsweise ist das Entriegelungselement 169 in der Ausführungsform von Fig. 8 an einer Rückseite der Handwerkzeugmaschine 100, bzw. an einem der Werkzeugaufnahme 140 gegenüberliegenden Ende der Handwerkzeugmaschine 100, angeordnet. Durch ein Betätigen des Entriegelungselements 169 in Längsrichtung 102 bzw. zur Werkzeugaufnahme 140 hin kann eine Freigabe erfolgen. Vorzugsweise ist dem Beaufschlagungselement 242 an seinem der Werkzeugaufnahme 140 zugewandten Ende, bzw. seinem der Mehrzahl von Einsatzwerkzeugen 196 zugewandten Ende, ein Magnetelement 760 zugeordnet. Das Magnetelement 760 ist zur sicheren Beaufschlagung eines Einsatzwerkzeugs 191 vom Einsatzwerkzeugmagazin 150 in die Werkzeugaufnahme 140 oder von der Werkzeugaufnahme 140 in das Einsatzwerkzeugmagazin 150 ausgebildet.

Bevorzugt ist ein Drehrichtungsschalter 710 des Antriebsmotors 180 an einer Oberseite 799 der Handwerkzeugmaschine 100 angeordnet. Zur Drehrichtungseinstellung ist der Drehrichtungsschalter 710 in Längsrichtung 102 bewegbar. Vorzugsweise ist zum Betätigen des Einsatzwerkzeugmagazins 150 ein Betätigungselement 720 vorgesehen. Das Betätigungselement 720 ist vorzugsweise in Vertikalrichtung 702 zwischen dem Antriebsmotor 180 und dem Handschalter 130 angeordnet und bevorzugt in Querrichtung 499 von Fig. 4 betätigbar.

Gemäß einer Ausführungsform bewirkt ein Verschieben des Betätigungselements 720 durch einen Benutzer der Handwerkzeugmaschine 100 in Querrichtung 499 von Fig. 4, bzw. 1102, 1103 von Fig. 12, der Magazinwelle 305 von Fig. 3 des Einsatzwerkzeugmagazins 150 ein Verdrehen des Einsatzwerkzeugmagazins 150 um die Magazinwelle 305. Vorzugsweise ist der Handschalter 130 an dem Handgriff 115 der Handwerkzeugmaschine 100 angeordnet. Das Sperrelement 250 ist vorzugsweise an einem von der Werkzeugaufnahme 140 abgewandten Bereich des Gehäuses 105 der Handwerkzeugmaschine 100 angeordnet. Darüber hinaus ist das Einsatzwerkzeugmagazin 150, insbesondere das Betätigungselement 720, an einem der Werkzeugaufnahme 140 und dem Handschalter 130 zugewandten Bereich des Gehäuses 105 der Handwerkzeugmaschine 100 derart angeordnet, dass eine einhändige Bedienung des Einsatzwerkzeugmagazins ermöglicht wird.

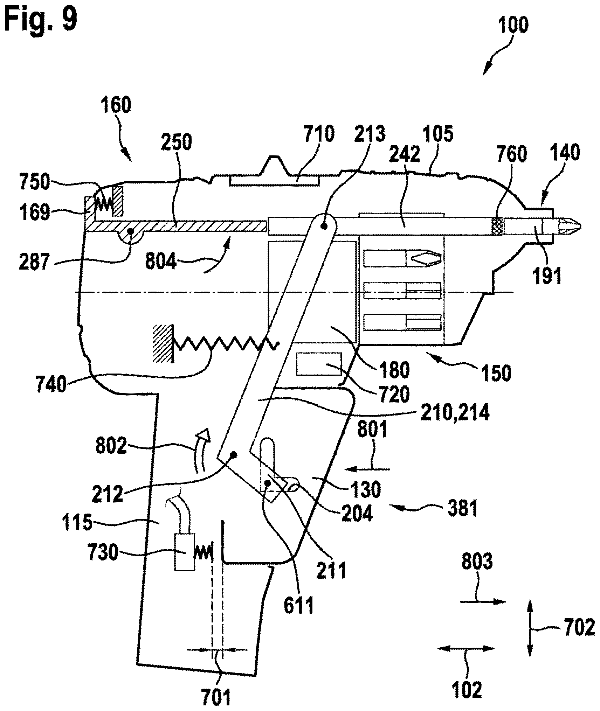

Fig. 9 zeigt die Handwerkzeugmaschine 100 von Fig. 8, wobei der Handschalter 130 in der Beaufschlagungsposition 381 angeordnet ist. In der Beaufschlagungsposition 381 ist der Handschalter 130 in Richtung eines Pfeils 801 zum Handgriff 115 bewegt bzw. betätigt worden, wodurch der Abstand 701 zwischen dem

Handschalter 130 und dem Ein-Aus-Schalter 730 verringert wird. Durch das Betätigen des Handschalters 130 wurde der Aufnahmeabschnitt 211 des Hebelarms 210 zu einem in Vertikalrichtung 702 illustrativ unteren Abschnitt der Aufnahme 204 des Handschalters 130 beaufschlagt, wodurch sich der Hebelarm 210 um sein Lagerungselement 212 im Uhrzeigersinn 802 verkippt. Dabei wird das Beaufschlagungselement 242 bevorzugt in Längsrichtung 102, bzw. in Richtung eines Pfeils 803 zur Werkzeugaufnahme 140 verschoben. Durch das Beaufschlagen des Beaufschlagungselements 242 durch den Hebelarm 210 wird das Sperrelement 250 vorzugsweise von seiner Freigabestellung 259 (vgl. Fig. 2) in die Sperrstellung 359 (vgl. Fig. 3) über sein Drehlager 287 in Richtung eines Pfeils 804, bzw. entgegen dem Uhrzeigersinn, verschwenkt. Durch das Bewegen des Beaufschlagungselements 242 wird das Einsatzwerkzeug 191 vom Einsatzwerkzeugmagazin 150 in die Werkzeugaufnahme 140 beaufschlagt bzw. bewegt.

Fig. 10 zeigt die Handwerkzeugmaschine 100 von Fig. 8 und Fig. 9, wobei der Handschalter 130 in einer Arbeitsposition 899 angeordnet ist. Dabei beaufschlagt der Handschalter 130 den Ein-Aus-Schalter 730, wodurch der Antriebsmotor 180 aktiviert wird. In der Arbeitsposition 899 wird der Aufnahmeabschnitt 211 des Hebelarms 210 in einem der Werkzeugaufnahme 140 angeordneten Ende der Aufnahme 204 des Handschalters 130 angeordnet. Durch die Aktivierung des Antriebsmotors 180 kann somit das Einsatzwerkzeug 191 mit der Werkzeugaufnahme 140 in Umfangsrichtung 902 rotieren.

Durch ein Beaufschlagen des Entriegelungselements 169 des Sperrelements 250 in Richtung der Werkzeugaufnahme 140 wird das Federelement 750 komprimiert und das Sperrelement 250 kann sich um seinen Drehpunkt 287 verdrehen und das Beaufschlagungselement 242 freigeben.

Lässt ein Benutzer der Handwerkzeugmaschine 100 in der Arbeitsposition 899 den Handschalter 130 los, bzw. nimmt die Beaufschlagungskraft vom Handschalter 130, wird der Handschalter 130 in die Beaufschlagungsposition 381 von Fig. 9 verbracht bzw. verschoben. Erst durch ein Freigeben des Sperrelements 250 wird das Einsatzwerkzeug 191 von der Werkzeugaufnahme 140 zurück ins Einsatzwerkzeugmagazin 150 bewegt und der Handschalter bewegt sich zurück in seine Ruheposition 281 (s. Fig. 8).

Fig. 11 zeigt das Einsatzwerkzeugmagazin 150 von Fig. 1 bis Fig. 4, das gemäß einer Ausführungsform an seinem Außenumfang eine Mehrzahl von Rastelementen 1010 aufweist. Bevorzugt sind Rastelemente 1011, 1012 der Mehrzahl von Rastelementen 1010 als Erweiterung in radialer Richtung 1018 und in Längsrichtung 1019 des Einsatzwerkzeugmagazins 150 ausgebildet. Vorzugsweise ist dem Einsatzwerkzeugmagazin 150 das Betätigungselement 720 von Fig. 7 zugeordnet. Das Betätigungselement 720 weist vorzugsweise einen rechteckigen Grundkörper 1029 auf, der parallel zum Einsatzwerkzeugmagazin 150 angeordnet ist. An seiner dem Einsatzwerkzeugmagazin 150 zugewandten Seite weist das Betätigungselement 720 vorzugsweise zwei einander zugewandte Beaufschlagungsstege 1030, 1031 auf. Die Beaufschlagungsstege 1030, 1031 sind dabei bevorzugt derart angeordnet, dass ein Rastelement 1011, 1012 der Mehrzahl von Rastelementen 1010 mittig zu den Beaufschlagungsstegen 1030, 1031 anordenbar ist. Des Weiteren ist dem Betätigungselement 720 zumindest ein, bevorzugt zumindest zwei Federelemente 1020, 1021 zugeordnet. Die Federelemente 1020, 1021 sind bei einem Verschieben des Betätigungselements 720 in Querrichtung 1102, 1103 (s. Fig. 12) der Magazinwelle 305 von Fig. 3 zum Verdrehen des Einsatzwerkzeugmagazins 150 komprimierbar. Durch ein Komprimieren eines der zwei Federelemente 1020, 1021 erfolgt ein Beaufschlagen eines Rastelements 1011, 1012 der Mehrzahl von Rastelemente 1010 durch zumindest einen Beaufschlagungssteg 1030, 1031.

Fig. 12 zeigt das Einsatzwerkzeugmagazin 150 von Fig. 11, sowie das Betätigungselement 720 im eingebauten Zustand im Gehäuse 105 der Handwerkzeugmaschine 100. Das Betätigungselement 720 ist dabei nach Art eines Drehrichtungsschalters im Gehäuse 105 angeordnet und seitlich bzw. in Querrichtung 499 bzw. in Querrichtung 1102, 1103 der Magazinwelle 305 betätigbar, bzw. verschiebbar. Durch ein Beaufschlagen des Betätigungselements 720, beispielhaft in Querrichtung 1102, bzw. illustrativ nach rechts, wird das Federelement 1020 gegen ein gehäusefestes Abstützelement 1099 beaufschlagt und somit komprimiert. Dabei verschiebt sich das Betätigungselement 720 illustrativ nach rechts, wobei der Beaufschlagungssteg 1030 ein Rastelement 1199 des Einsatzwerkzeugmagazins 150, welches zwischen den Beaufschlagungsstegen 1030, 1031 angeordnet ist, gegen den Uhrzeigersinn beaufschlagt und somit das Einsatzwerkzeugmagazin 150 in Umfangsrichtung 1101 verdreht. Darüber hinaus verdeutlicht Fig. 12 dem Einsatzwerkzeugmagazin 150 zugeordnete Aufnahmen 1110 zur Anordnung von Einsatzwerkzeugen 191, 192, 193, 194, 195 der Mehrzahl von Einsatzwerkzeugen 196 von Fig. 1.

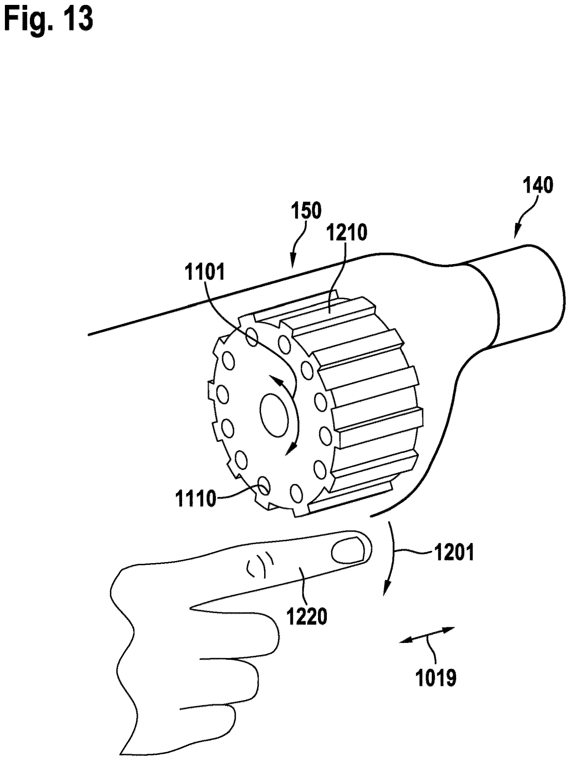

Fig. 13 zeigt die Handwerkzeugmaschine 100 von Fig. 1 bis Fig. 4 mit dem Einsatzwerkzeugmagazin 150, das gemäß einer weiteren Ausführungsform lediglich in Umfangsrichtung 1101 Beaufschlagungsstege 1210 aufweist. Die Beaufschlagungsstege 1210 sind dabei vorzugsweise entlang der gesamten Längserstreckung bzw. Längsrichtung 1019 des Einsatzwerkzeugmagazins 150 ausgebildet. Ein Beaufschlagen der Beaufschlagungsstege 1210 erfolgt durch einen Benutzer, insbesondere durch einen Finger 1220 eines Benutzers der Handwerkzeugmaschine 100, welcher ein Verdrehen des Einsatzwerkzeugmagazins 150 in Umfangsrichtung 1101 bewirken kann. Dabei wird das Einsatzwerkzeugmagazin 150 in Richtung eines Pfeils 1201, bzw. im Uhrzeigersinn, durch ein Verdrehen, bzw. Beaufschlagen mittels eines Fingers 1220, insbesondere eines Zeigefingers eines Benutzers, bewirkt. Hierbei wird das Einsatzwerkzeugmagazin 150 in Umfangsrichtung 1101, insbesondere im Uhrzeigersinn, zur Einsatzwerkzeugauswahl verdreht.

## Patentansprüche

1. Handwerkzeugmaschine (100), insbesondere Schrauber, mit einem Gehäuse (105), in dem zumindest ein Antriebsmotor (180) zum Antrieb einer Werkzeugaufnahme (140) angeordnet ist, wobei der Antriebsmotor (180) über einen Handschalter (130) aktivierbar ist, und wobei die Werkzeugaufnahme (140) zur Aufnahme eines Einsatzwerkzeugs (191) ausgebildet ist, und mit einem Einsatzwerkzeugmagazin (150) zur Lagerung einer Mehrzahl von auswählbaren Einsatzwerkzeugen (196), **dadurch gekennzeichnet, dass** der Handschalter (130) zum Beaufschlagen eines im Einsatzwerkzeugmagazin (150) angeordneten, ausgewählten Einsatzwerkzeugs (191) in axialer Richtung (102) des Antriebsmotors (180) von dem Einsatzwerkzeugmagazin (150) in die Werkzeugaufnahme (140) und zum Aktivieren des Antriebsmotors (180) betätigbar ist.

2. Handwerkzeugmaschine nach Anspruch 1, **dadurch gekennzeichnet, dass** der Handschalter (130) von einer unbeaufschlagten Ruheposition in eine Beaufschlagungsposition, in der das im Einsatzwerkzeugmagazin (150) angeordnete, ausgewählte Einsatzwerkzeug (191) in die Werkzeugaufnahme (140) beaufschlagt wird, sowie in eine Arbeitsposition, in der der Antriebsmotor (180) aktiviert wird, betätigbar ist.

3. Handwerkzeugmaschine nach Anspruch 2, **dadurch gekennzeichnet, dass** dem Handschalter (130) eine Beaufschlagungsvorrichtung (160) mit einem Beaufschlagungselement (242) zugeordnet ist, das in der Beaufschlagungsposition des Handschalters (130) das im Einsatzwerkzeugmagazin (150) angeordnete, ausgewählte Einsatzwerkzeug (191) in die Werkzeugaufnahme (140) beaufschlagt.

4. Handwerkzeugmaschine nach Anspruch 3, **dadurch gekennzeichnet, dass** die Beaufschlagungsvorrichtung (160) einen Hebelarm (210) aufweist, der den Handschalter (130) mit dem Beaufschlagungselement (242) verbindet.

5. Handwerkzeugmaschine nach Anspruch 4, **dadurch gekennzeichnet, dass** der Hebelarm (210) über einen Schieber (220) mit dem Beaufschlagungselement (242) verbunden ist, wobei der Schieber (220) Aufnahmen (221) aufweist und der Hebelarm (210) Nocken (213), die in den Aufnahmen (221) angeordnet sind.

6. Handwerkzeugmaschine nach Anspruch 5, **dadurch gekennzeichnet, dass** an dem Schieber (220) zumindest ein Zahnrad (231, 232) angeordnet ist und das Beaufschlagungselement (242) einen zugeordneten Zahnstangenabschnitt (241) zum Verfahren des Beaufschlagungselements (242) in axialer Richtung (102) des Antriebsmotors (180) zum Beaufschlagen des im Einsatzwerkzeugmagazin (150) angeordneten, ausgewählten Einsatzwerkzeugs (191) in die Werkzeugaufnahme (140) aufweist.

7. Handwerkzeugmaschine nach einem der Ansprüche 3 bis 6, **dadurch gekennzeichnet, dass** die Beaufschlagungsvorrichtung (160) ein Sperrelement (250) aufweist, das in der Beaufschlagungsposition des Handschalters (130) in einer Sperrstellung (359) das Beaufschlagungselement (242) arretiert.

8. Handwerkzeugmaschine nach Anspruch 7, **dadurch gekennzeichnet, dass** das Sperrelement (250) in der Sperrstellung (359) zum Freigeben des Beaufschlagungselements (242) manuell betätigbar ist.

9. Handwerkzeugmaschine nach Anspruch 8, **dadurch gekennzeichnet, dass** der in der Arbeitsposition angeordnete Handschalter (130) zur Deaktivierung des Antriebsmotors (180) von der Arbeitsposition in die Beaufschlagungsposition freigebbar ist, wobei eine Verstellung des Handschalters (130) von der Beaufschlagungsposition in die Ruheposition nur bei einer Anordnung des Sperrelements (250) in einer zugeordneten Freigabestellung (259) erfolgt.

10. Handwerkzeugmaschine nach einem der vorhergehenden Ansprüche, **dadurch gekennzeichnet, dass** das Einsatzwerkzeugmagazin (150) zur Auswahl eines Einsatzwerkzeugs (191) von der Mehrzahl von Einsatzwerkzeugen (196) über eine Magazinwelle (305) drehbeweglich im oder am Gehäuse (1005) gelagert ist, wobei ein Verdrehen des Einsatzwerkzeugmagazins (150) zur Auswahl eines Einsatzwerkzeugs (191) von der Mehrzahl von Einsatzwerkzeugen (295) durch ein manuelles Verdrehen des Einsatzwerkzeugmagazins (150) durch einen Benutzer der Handwerkzeugmaschine (100) um die Magazinwelle (305) des Einsatzwerkzeugmagazins (150) herum erfolgt.

11. Handwerkzeugmaschine nach Anspruch 10, **dadurch gekennzeichnet, dass** ein Betätigungselement (720) zum Betätigen des Einsatzwerkzeugmagazins (150) vorgesehen ist, wobei ein Verschieben des Betätigungselements (720) durch einen Benutzer der Handwerkzeugmaschine (100) in Querrichtung (1102, 1103) der Magazinwelle (305) des Einsatzwerkzeugmagazins (150) ein Verdrehen des Einsatzwerkzeugmagazins (150) um die Magazinwelle (305) bewirkt.

12. Handwerkzeugmaschine nach Anspruch 11, **dadurch gekennzeichnet, dass** dem Betätigungselement (720) zumindest zwei Federelemente (1020, 1021) zugeordnet sind, die bei dem Verschieben des Betätigungselements (720) in Querrichtung (1102, 1103) der Magazinwelle (305) zum Verdrehen des Einsatzwerkzeugmagazins (150) komprimierbar sind, wobei zwischen den zumindest zwei Federelementen (1020, 1021) ein gehäusefestes Abstützelement (1099) angeordnet ist.

13. Handwerkzeugmaschine nach einem der Ansprüche 7 bis 9 und Anspruch 10 oder 11, **dadurch gekennzeichnet, dass** der Handschalter (130) an einem Handgriff (115) der Handwerkzeugmaschine (100), das Sperrelement (250) an einem von der Werkzeugaufnahme (140) abgewandten Bereich des Gehäuses (110) der Handwerkzeugmaschine (100), und das Einsatzwerkzeugmagazin (150), insbesondere das Betätigungselement (720), an einem der Werkzeugaufnahme (140) und dem Handschalter (130) zugewandten Bereich des Gehäuses (110) der Handwerkzeugmaschine (100) derart angeordnet sind, dass eine einhändige Bedienung ermöglicht wird.

## Claims

1. Hand-held power tool (100), in particular screwdriver, comprising a housing (105) in which at least one drive motor (180) for driving a tool receptacle (140) is arranged, wherein the drive motor (180) can be activated via a manual switch (130), and wherein the tool receptacle (140) is designed to receive an insert tool (191), and comprising an insert tool magazine (150) for storing a plurality of interchangeable insert tools (196), **characterized in that** the manual switch (130) can be actuated to load a selected insert tool (191), which is arranged in the insert tool magazine (150), in the axial direction (102) of the drive motor (180) from the insert tool magazine (150) into the tool receptacle (140) and to activate the drive motor (180).

2. Hand-held power tool according to Claim 1, **characterized in that** the manual switch (130) can be actuated to change from a non-loading inactive position to a loading position, in which the selected insert tool (191), which is arranged in the insert tool magazine (150), is loaded into the tool receptacle (140), and to a working position, in which the drive motor (180) is activated.

3. Hand-held power tool according to Claim 2, **characterized in that** the manual switch (130) is assigned a loading device (160) with a loading element (242), which in the loading position of the manual switch (130) loads the selected insert tool (191), which is arranged in the insert tool magazine (150), into the tool receptacle (140).

4. Hand-held power tool according to Claim 3, **characterized in that** the loading device (160) has a lever arm (210), which connects the manual switch (130) to the loading element (242).

5. Hand-held power tool according to Claim 4, **characterized in that** the lever arm (210) is connected to the loading element (242) via a slide (220), wherein the slide (220) has receptacles (221) and the lever arm (210) has cams (213), which are arranged in the receptacles (221).

6. Hand-held power tool according to Claim 5, **characterized in that** at least one gearwheel (231, 232) is arranged on the slide (220) and the loading element (242) has an assigned toothed-rack portion (241) for moving the loading element (242) in the axial direction (102) of the drive motor (180) to load the selected insert tool (191), which is arranged in the insert tool magazine (150), into the tool receptacle (140).

7. Hand-held power tool according to one of Claims 3 to 6, **characterized in that** the loading device (160) has a locking element (250) which, in the loading position of the manual switch (130), in a locking position (359), arrests the loading element (242).

8. Hand-held power tool according to Claim 7, **characterized in that**, in the locking position (359), the locking element (250) can be manually actuated to release the loading element (242).

9. Hand-held power tool according to Claim 8, **characterized in that** the manual switch (130) when in the working position can be released from the working position into the loading position to deactivate the drive motor (180), wherein an adjustment of the manual switch (130) from the loading position to the inactive position takes place only when the locking element (250) is in an assigned release position (259).

10. Hand-held power tool according to one of the preceding claims, **characterized in that** the insert tool magazine (150) is rotatably mounted in or on the housing (1005) via a magazine shaft (305) for the purpose of selecting an insert tool (191) from the plurality of insert tools (196), wherein the insert tool magazine (150) is rotated about the magazine shaft (305) of the insert tool magazine (150) by a user of the hand-held power tool (100) manually rotating the insert tool magazine (150) for the purpose of selecting an insert tool (191) from the plurality of insert tools (295).

11. Hand-held power tool according to Claim 10, **characterized in that** an actuation element (720) for actuating the insert tool magazine (150) is provided, wherein a displacement of the actuation element (720) by a user of the hand-held power tool (100) in the transverse direction (1102, 1103) of the magazine shaft (305) of the insert tool magazine (150) causes the insert tool magazine (150) to be rotated about the magazine shaft (305).

12. Hand-held power tool according to Claim 11, **characterized in that** the actuation element (720) is assigned at least two spring elements (1020, 1021), which can be compressed on displacement of the actuation element (720) in the transverse direction (1102, 1103) of the magazine shaft (305) to make the insert tool magazine (150) rotate, wherein a support element (1099) secured to the housing is arranged between the at least two spring elements (1020, 1021).

13. Hand-held power tool according to one of Claims 7 to 9 and Claim 10 or 11, **characterized in that** the manual switch (130) is arranged on a handle (115) of the hand-held power tool (100), the locking element (250) is arranged on a region of the housing (110) of the hand-held machine tool (100) that is remote from the tool receptacle (140), and the insert tool magazine (150), in particular the actuation element (720), is arranged on a region of the housing (110) of the hand-held machine tool (100) that is next to the tool receptacle (140) and the manual switch (130) in such a way as to enable one-handed operation.

## Revendications

1. Outil électrique portatif (100), en particulier visseuse, avec un boîtier (105) dans lequel est disposé au moins un moteur d'entraînement (180) pour l'entraînement d'un porte-outil (140), le moteur d'entraînement (180) étant apte à être activé par une commande manuelle (130), et le porte-outil (140) étant conçu pour recevoir un outil d'insertion (191), et avec un magasin (150) d'outils d'insertion pour le stockage d'une pluralité d'outils d'insertion (196) sélectionnables, **caractérisé en ce que** la commande manuelle (130) est apte à être actionnée de façon à charger un outil d'insertion (191) sélectionné, disposé dans le magasin (150) d'outils d'insertion, dans la direction axiale (102) du moteur d'entraînement (180), depuis le magasin (150) d'outils d'insertion jusque dans le porte-outil (140) et à activer le moteur d'entraînement (180).

2. Outil électrique portatif selon la revendication 1, **caractérisé en ce que** la commande manuelle (130) est apte à être actionnée d'une position de repos, de non-chargement, à une position de chargement, dans laquelle l'outil d'insertion (191) sélectionné, disposé dans le magasin (150) d'outils d'insertion, est chargé dans le porte-outil (140), ainsi qu'à une position de travail, dans laquelle le moteur d'entraînement (180) est activé.

3. Outil électrique portatif selon la revendication 2, **caractérisé en ce qu'**à la commande manuelle (130) est associé un dispositif de chargement (160) avec un élément de chargement (242) qui, dans la position de chargement de la commande manuelle (130), charge l'outil d'insertion (191) sélectionné, disposé dans le magasin (150) d'outils d'insertion, dans le porte-outil (140).

4. Outil électrique portatif selon la revendication 3, **caractérisé en ce que** le dispositif de chargement (160) présente un bras de levier (210) qui relie la commande manuelle (130) à l'élément de chargement (242).

5. Outil électrique portatif selon la revendication 4, **caractérisé en ce que** le bras de levier (210) est relié à l'élément de chargement (242) par un coulisseau (220), le coulisseau (220) présentant des logements (221) et le bras de levier (210) présentant des cames (213) qui sont disposées dans les logements (221).

6. Outil électrique portatif selon la revendication 5, **caractérisé en ce qu'**au moins une roue dentée (231, 232) est agencée sur le coulisseau (220) et **en ce que** l'élément de chargement (242) présente une section en crémaillère (241) associée pour déplacer l'élément de chargement (242) dans la direction axiale (102) du moteur d'entraînement (180) afin de charger l'outil d'insertion sélectionné (191) agencé dans le magasin (150) d'outils d'insertion dans le porte-outil (140).

7. Outil électrique portatif selon l'une des revendications 3 à 6, **caractérisé en ce que** le dispositif de chargement (160) présente un élément de blocage (250) qui, dans la position de chargement de la commande manuelle (130), bloque l'élément de chargement (242) dans une position de blocage (359).

8. Outil électrique portatif selon la revendication 7, **caractérisé en ce que** l'élément de blocage (250) est apte à être actionné manuellement dans la position de blocage (359) pour libérer l'élément de chargement (242).

9. Outil électrique portatif selon la revendication 8, **caractérisé en ce que** la commande manuelle (130) placée dans la position de travail est apte à être libérée de la position de travail à la position de chargement pour désactiver le moteur d'entraînement (180), un déplacement de la commande manuelle (130) de la position de chargement à la position de repos n'étant effectué que lorsque l'élément de blocage (250) est placé dans une position de libération (259) associée.

10. Outil électrique portatif selon l'une des revendications précédentes, **caractérisé en ce que** le magasin (150) d'outils d'insertion est monté mobile en rotation dans ou sur le boîtier (1005) par l'intermédiaire d'un arbre de magasin (305) pour sélectionner un outil d'insertion (191) parmi la pluralité d'outils d'insertion (196), une rotation du magasin (150) d'outils d'insertion pour la sélection d'un outil d'insertion (191) parmi la pluralité d'outils d'insertion (295) étant effectuée par une rotation manuelle du magasin (150) d'outils d'insertion par un utilisateur de l'outil électrique portatif (100) autour de l'arbre de magasin (305) du magasin (150) d'outils d'insertion.

11. Outil électrique portatif selon la revendication 10, **caractérisé en ce qu'**un élément d'actionnement (720) est prévu pour actionner le magasin (150) d'outils d'insertion, un déplacement de l'élément d'actionnement (720) par un utilisateur de l'outil électrique portatif (100) dans la direction transversale (1102, 1103) de l'arbre de magasin (305) du magasin (150) d'outils d'insertion provoquant une rotation du magasin (150) d'outils d'insertion autour de l'arbre de magasin (305).

12. Outil électrique portatif selon la revendication 11, **caractérisé en ce qu'**à l'élément d'actionnement (720) sont associés au moins deux éléments élastiques (1020, 1021) qui sont aptes à être comprimés lors du déplacement de l'élément d'actionnement (720) dans la direction transversale (1102, 1103) de l'arbre de magasin (305) pour faire tourner le magasin (150) d'outils d'insertion, un élément d'appui (1099) solidaire du boîtier étant agencé entre les au moins deux éléments élastiques (1020, 1021).

13. Outil électrique portatif selon l'une des revendications 7 à 9 et la revendication 10 ou 11, **caractérisé en ce que** la commande manuelle (130) est placée sur une poignée (115) de l'outil électrique portatif (100), l'élément de blocage (250) est placé sur une zone du boîtier (110) de l'outil électrique portatif (100) opposée au porte-outil (140), et le magasin (150) d'outils d'insertion, en particulier l'élément d'actionnement (720), sont agencés sur une zone du boîtier (110) de l'outil électrique portatif (100) tournée vers le porte-outil (140) et la commande manuelle (130), de telle sorte qu'une utilisation à une seule main est possible.
